Europäisches Patentamt

European Patent Office

Office européen des brevets

(19)

(11) Publication number: **0 111 853**

**B1**

(12) **EUROPEAN PATENT SPECIFICATION**

(45) Date of publication of patent specification: **16.03.88**

(51) Int. Cl.⁴: **G 01 K 11/12, G 01 K 11/14**

(21) Application number: **83112420.1**

(22) Date of filing: **09.12.83**

(54) **Temperature measuring apparatus.**

(30) Priority: **17.12.82 JP 221169/82**

(43) Date of publication of application:
**27.06.84 Bulletin 84/26**

(45) Publication of the grant of the patent:
**16.03.88 Bulletin 88/11**

(84) Designated Contracting States:
**DE FR GB NL**

(56) References cited:
**FR-A-2 319 120**
**US-A-4 136 566**
**US-A-4 338 516**

**CHEMICAL ABSTRACTS, vol. 82, 1975, page
392, no. 91894b, Columbus, Ohio, US;
G.B.ABDULLAEV et al.: "Fundamental
absorption edge of the new semiconductor
compound cadmium gallium indium sulfide
(CdIn-GaS4)"**

(73) Proprietor: **FUJI ELECTRIC CORPORATE
RESEARCH AND DEVELOPMENT LTD.
2-1, Nagasaka 2-chome
Yokosuka-shi Kanagawa-ken (JP)**

(72) Inventor: **Taro, Toyoda
21-2 Ooi 5-chome
Shinagawa-ku Tokyo (JP)**
Inventor: **Yasukazu, Seki
46-2 Ooi 1-chome
Shinagawa-ku Tokyo (JP)**

(74) Representative: **Mehl, Ernst, Dipl.-Ing. et al
Postfach 22 01 76
D-8000 München 22 (DE)**

(56) References cited:
**IEEE TRANSACTIONS ON MICROWAVE
THEORY AND TECHNIQUES, vol. MTT-30, no.
4, April 1982, pages 522-525, New York, US;
K.KYUMA et al.: "Fiber-optic instrument for
temperature measurement"**

Courier Press, Leamington Spa, England.

## Description

The invention relates to a temperature measuring apparatus according to the prior art portion of Claim 1.

It is generally desired for optical temperature measuring apparatus of this type that the workable temperature can be selected over a broad range and the reliability can be ensured for a long time within the range of the working temperature.

It is known in accordance with the prior art portion of Claim 1 (corresponding to US—A—4 338 516) to use a semiconductor crystal (Indium Phosphite Telluride) for temperature measurement. The light of a light source passes the semiconductor crystal and is detected by a photodiode. A temperature measurement is possible because the optical crystal has an optical high pass characteristic in wavelength terms, the band-edge wavelength between frequencies of maximum and minimum light transmission through said crystal being temperature-dependent.

The optical temperature measuring apparatuses proposed so far are generally classified into (1) a group comprising a radiation thermometer connected with an optical fiber, through which heat radiation emitted from an object to be measured is transmitted and (2) a group of contact type comprising a detection element in which the mode of light transmission is changed depending on the temperature and a temperature-modified optical signal is transmitted through an optical fiber in contact with an object to be measured.

Since the possible range for the temperature measurement is higher than above 500°C due to infrared absorption in the temperature measuring apparatus of the type (1), it is suitable to the measurement of high temperature but shows poor accuracy in the region for industrial instrumentation, that is, below 500°C.

The contact type temperature measuring apparatuses of the type (2) that have been reported up to now include the following system; in which (1) light is interrupted by bimetals or thermocouples to change the transmission power, (b) temperature-dependency of double refractive crystal is utilized, (c) temperature-dependency of refractive index in liquid crystal is utilized, (d) temperature dependent intensity of various lights excited from phosphorescent substance is utilized and (e) temperature-dependency of light absorbance is utilized.

However, the optical temperature measuring apparatuses utilizing these systems involve problems in their detecting device constituting a detector, a various optical components and structural parts such as spacers and casings in view of the heat resistance and mechanical stability thereof, and the upper limit for the working temperature of the optical temperature measuring apparatus realized or proposed at present is restricted to about 350°C.

Thus, there can be scarcely found temperature measuring apparatuses at present having satisfactory performance in a medium or low temperature region which is most demanded for and utilized in the industrial instrumentation. The light absorption system (e) has a relatively simple structure and is expected for practical use and, among all, those utilizing the absorption change dependent on temperature at the energy band gap of the semiconductor are utilized. A semiconductor laser is mainly used as a light source, for which is selected a semiconductor or a compound semiconductor having such an optical absorbing edge for the wavelength as corresponding to the spectrum of the light source. A typical example comprises a combination of GaAs or CdTe with an AlGaAs type semiconductor laser (up to 0.8 μm). However, the upper limits for the measuring temperature in each of the combined systems are restricted to 200°C and 300°C respectively in view of the spectrum width of the light source. In addition, a solid-solution region is present in these compound semiconductors at a temperature above 300°C thus still leaving problems in the long-time stability.

It is further known from "IEEE Trans. On Microwave Theory And Techniques MTT-30 (1982) 4, page 522—525, New York, USA" that an instrument for measuring temperatures consist of a fiber-optic temperature sensor. This sensor is responding to optical absorption change in a semiconductor and a unique signal processing system with two different-wavelength light emitting diodes (LED's).

The object of this invention is to overcome the foregoing drawnbacks and provide an optically temperature measuring device with less cost and a high reliability.

In accordance with the present invention there is provided an apparatus as disclosed in Claim 1. The optical characteristics of the compound semiconductor material $CdInGaS_4$ are described in the earlier published "Chemical Abstracts", Vol. 82, 1975, page 392, N. 91894b, Columbus, Ohio, USA "Fundamental absorption edge of the new semiconductor compound cadmium gallium indium sulfide". This discloses the examination of the optical absorption edges of $CdInGaS_4$; for this purpose examples with different thicknesses were measured at two different temperatures.

The temperature detecting device according to the invention has the following advantageous merits;

1. $CdInGaS_4$ is stable at high temperature and excellent in the reliability for a long time,

2. $CdInGaS_4$ is stable over a wide temperature range,

3. $CdInGaS_4$ can easily be obtained as a single crystal at high quality and with less cost and it can be easily fabricated into a device,

4. since $CdInGaS_4$ can be grown into a ribbon-like single crystal with preferred flatness and at a good quality by way of a gas phase growing method, it requires no polishing fabrication, and

5. measurement for a wide temperature range is possible by the use of white light source. Furthermore, temperature range to be measured can be optionally set by the use of a filter.

Ways of carrying out the invention are described in detail below with reference to the drawings.

Fig. 1 is a graph showing the temperature-dependent change for the spectrum of light absorption coefficient of a quaternary compound semiconductor $CdInGaS_4$,

Fig. 2 is a chart showing the temperature-dependent change .of the energy gap at the absorption edge of the quaternary compound semiconductor $CdInGaS_4$, and

Fig 3 through Fig. 6 show respectively schematic structural views of different embodiments of the measuring temperature apparatus according to this invention.

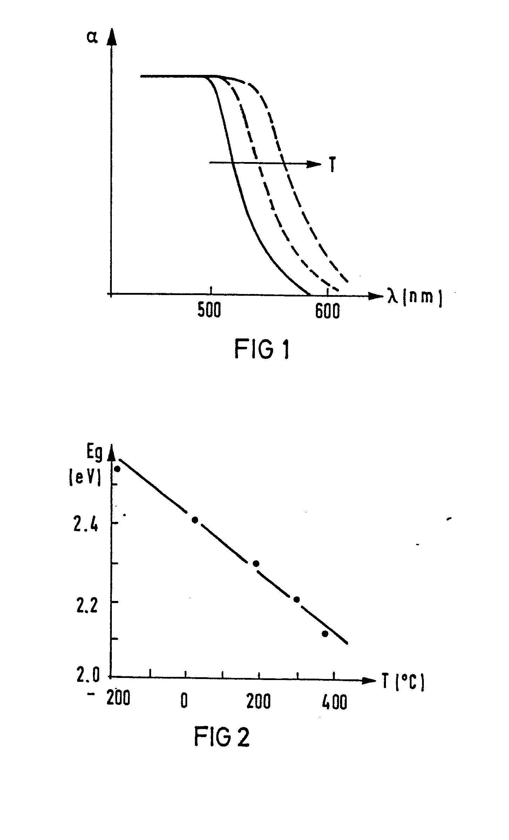

As shown in Fig. 1, absorption coefficient $\alpha$ is rapidly increased for the light of a wavelength region shorter than $\lambda g(T)$, which is the absorption edge corresponding to the energy gap $Eg(T)$.

The absorption region is a visible ray region between 500 and 600 nm as shown in the Fig. 1 and the absorption edge $\lambda g(T)$ shifts toward the longer wavelength as the temperature rises. The temperature-dependency corresponds to the temperature dependent change in the energy gap shown in Fig. 2. While it has been known that the change is linear at a temperature higher than $-150°C$ for GaAs, the linear change is present at a temperature higher than $-200°C$ for $CdInGaS_4$ according to this invention as shown in Fig. 2. Further, the absorption edge shift is of about 0.16 nm/K, which is about one half of the value for GaAs thus making it possible for the temperature measurement in a broader temperature range. $CdInGaS_4$ in this invention is stable at high temperature above 500°C, shows neither oxidative nor hygroscopic reaction and remains stable for a long time.

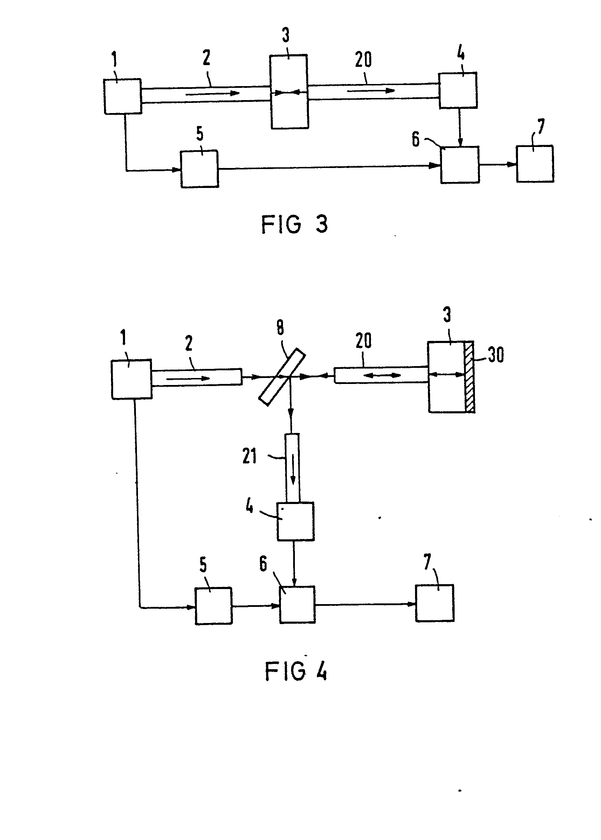

Fig. 3 shows a transmission type optical temperature measuring apparatus according to this invention. Light emitted from a light source 1 enters through an optical fiber 2 into a quaternary compound semiconductor $CdInGaS_4$ optical crystal 3 used as temperature sensor. White light is used as the light source 1 for measuring the temperature in a broad range. It is also possible for optionally set the temperature range by disposing a filter at the exit of the light source. In addition, it is also possible for an accurate measurement within a narrow temperature region by the use of a light emitting diode or a semiconductor laser. The crystal 3 is closely bonded to a good heat conducting material (not shown) to improve the temperature response. Light transmitted through the cyrstal 3 is received through an optical fiber 20 to a photoreceiver 4. In order to compensate the fluctuation in the light source, light from the light source 1 is directly received by a photoreceiver 5 and the ratio between the outputs from the photoreceivers 4 and 5 is determined in a signal processing section 6. Further, the signal processing section 6 converts the signal output into a temperature and the value for the temperature is displayed on a temperature display section 7.

A reflection type optical temperature measuring apparatus according to this invention is shown in Fig. 4. Light emitted from the light source 1 enters through an optical fiber 2, a beam splitter 8, and an optical fiber 20 to a quaternary compound semiconductor $CdInGaS_4$ crystal 3. The light reflected by a reflection membrane 30 disposed on one surface of the crystal 3 is again passed through the crystal 3 and the optical fiber 20, reflected on the beam splitter 8 and received by way of an optical fiber 21 at a photoreceiver 4. Procession after the photoreceiver 4 is the same as in the embodiment shown in Fig. 3.

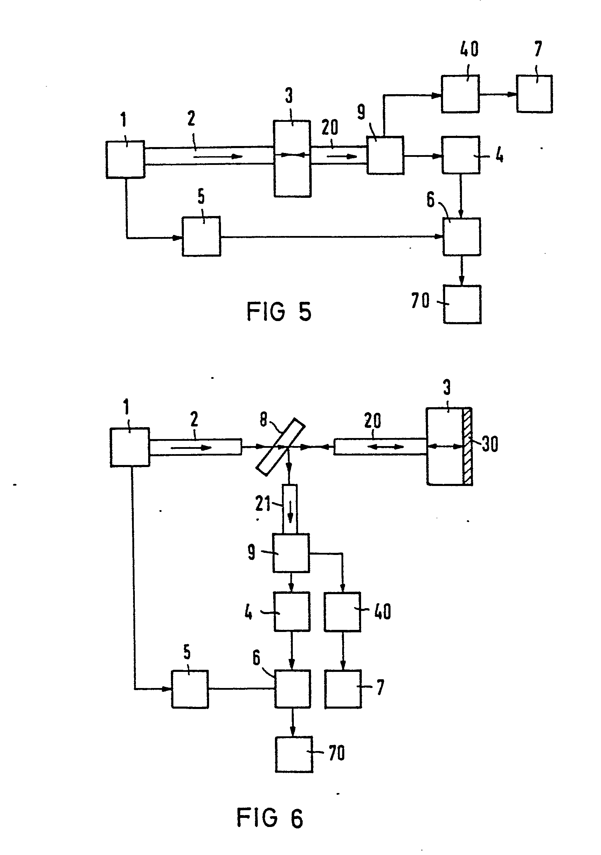

Fig. 5 and Fig. 6 show examples of structures for the transmission type optical temperature measuring apparatus and a reflection type optical temperature measuring apparatus respectively. These structures are almost the same as in the embodiments shown in Fig. 3 and Fig. 4 excepting that incident light applied to the photoreceiver 4 is divided by a divider 9 such that one enters to the photoreceiver 4 and the other enters to the spectroscope 40. Further, in order to compensate the fluctuation in the light source, the light from the light source 1 is directly received at a photoreceiver 5 and the ratio between the outputs from the photoreceivers 4 and 5 is determined by a signal processing section 6 and the output is directly displayed on a display section 70. The wavelength from the spectroscope 40 is converted so that the output is always maintained constant, and the value for the wavelength is converted into a temperature, which is displayed on a temperature display section 7.

**Claims**

1. Temperature measuring apparatus which comprises a light source (1), a photodetector (4) and a light transmitting semiconductor optical crystal (3) the wavelength band over which the absorption edge of said crystal extends, shifting in dependence on temperature so that the temperature of said crystal can be measured by measuring the light transmitted through said crystal, characterized in that said semiconductor crystal (3) consists of $CdInGaS_4$.

2. An apparatus as claimed in claim 1, characterized in that
— the light source (1) is arranged to transmit light through an optical fiber (2), the semiconductor crystal (3), and through an optical fiber (20) to said photodetector (4) whereby the photodetector (4) enables the display of the value of temperature on a display section (7).

3. An apparatus as claimed in claim 1, characterized in that
— the light source (1) is arranged to transmit light through an optical fiber (2), a beam splitter (8) and through an optical fiber (20) to the semiconductor crystal (3),
— and in that the photodetector (4) receives the light, reflected from a reflection means (30) disposed on one surface of the crystal (3), having passed through the crystal twice, and reflected from the beam splitter (8), through an optical fiber (21), whereby the photodetector (4) enables the display of the value of temperature on a display section (7).

4. An apparatus as claimed in one of the preceding claims, characterized in that
— the light source (1) is a light emitting diode.

5. An apparatus as claimed in claim 1, characterized in that
— the light source (1) is a semiconductor laser.

6. An apparatus as claimed in claims 2 or 3, characterized in that
— the light source is a white light source.

## Patentansprüche

1. Temperaturmeßanordnung
— mit einer Lichtquelle (1), einem Photodetektor (4) und einem lichtübertragenden optischen Halbleiterkristall (3), bei dem sich der Wellenlängenbereich, über den die Absorptionsgrenze hinausgeht, in Abhängigkeit von der Temperatur derart verschiebt, daß die Temperatur des Kristalls (3) durch Messung der übertragenen Lichtmenge ermittelt werden kann, dadurch gekennzeichnet,
— daß der Halbleiterkristall (3) aus CdIn$_{4}$GaS$_4$ besteht.

2. Temperaturmeßanordnung nach Anspruch 1, dadurch gekennzeichnet,
— daß die Lichtquelle (1) so angeordnet ist, daß das Licht durch einen Lichtwellenleiter (2), den Halbleiterkristall (3) und durch einen Lichtwellenleiter (20) zum Photodetektor (4) übertragen wird, wobei der Photodetektor (4) die Anzeige des Temperaturwertes in einem Anzeigefeld (7) emöglicht.

3. Temperaturmeßanordnung nach Anspruch 1, dadurch gekennzeichnet,
— daß die Lichtquelle (1) so angeordnet ist, daß das Licht durch einen Lichtwellenleiter (2), einen Strahlteiler (8) und durch einen Lichtwellenleiter (20) zum Halbleiterkristall (3) übertragen wird und
— daß bevor der Photodetektor (4) das Licht empfängt, dieses von einem Reflektor (30), der sich auf der Oberfläche des Kristalls (3) befindet, reflektiert wird, den Kristall (3) somit zweimal durchläuft und von einem Strahlteiler (8) durch einen Lichtwellenleiter (21) zum Photodetektor (4) reflektiert wird, wobei der Photodetektor (4) die Anzeige des Temperaturwertes in einem Anzeigefeld (7) ermöglicht.

4. Temperaturmeßanordnung nach einem der vorhergehenden Ansprüche, dadurch gekennzeichnet,
— daß die Lichtquelle (1) eine lichtemittierende Diode ist.

5. Temperaturmeßanordnung nach Anspruch 1, dadurch gekennzeichnet,
— daß die Lichtquelle (1) ein Halbleiterlaser ist.

6. Temperaturmeßanordnung nach Anspruch 2 oder Anspruch 3, dadurch gekennzeichnet,
— daß die Lichtquelle (1) eine Weißlichtquelle ist.

## Revendications

1. Dispositif de mesure de température comprenant une source lumineuse (1), un photodétecteur (4) et un cristal optique semiconducteur transmettant la lumière (3), la bande de longueur d'onde sur laquelle s'étend la limite d'absorption du cristal se décalant sous la dépendance de la température, de façon à permettre la mesure de la température du cristal par la mesure de la lumière transmise à travers ce cristal, caractérisé en ce que le cristal semiconducteur (3) consiste en CdInGaS$_4$.

2. Un dispositif selon la revendication 1, caractérisé en ce que
— la source lumineuse (1) est conçue de façon à émettre de la lumière vers le photodétecteur (4) par l'intermédiaire d'une fibre optique (2), du cristal semiconducteur (3) et d'une autre fibre optique (20), grâce à quoi le photodétecteur (4) permet d'afficher la valeur de température dans une section d'affichage (7).

3. Un dispositif selon la revendication 1, caractérisé en ce que
— la source lumineuse (1) est conçue de façon à émettre de la lumière vers le cristal semiconducteur (3), par l'intermédiaire d'une fibre optique (2), d'un diviseur de faisceau (8) et d'une autre fibre optique (20),
— et en ce que le photodétecteur (4) reçoit la lumière qui est réfléchie par un élément réfléchissant (30) placé sur une surface du cristal (3), après que cette lumière a traversé deux fois le cristal, a été réfléchie par le diviseur de faisceau (8) et a traversé une fibre optique (21), grâce à quoi le photodétecteur (4) permet d'afficher la valeur de température dans une section d'affichage (7).

4. Un dispositif selon l'une des revendications précédentes, caractérisé en ce que
— la source lumineuse (1) est une diode électroluminescente.

5. Un dispositif selon la revendication 1, caractérisé en ce que
— la source lumineuse (1) est un laser à semiconducteur.

6. Un dispositif selon les revendications 2 ou 3, caractérisé en ce que
— la source lumineuse est une source de lumière blanche.

FIG 1

FIG 2

FIG 3

FIG 4

0 111 853

FIG 5

FIG 6

3